# EUROPÄISCHE PATENTSCHRIFT

(11) **EP 0 952 688 B1**
(45) Veröffentlichungstag und Bekanntmachung des Hinweises auf die Patenterteilung: **23.05.2007**
(21) Anmeldenummer: 99890085.6
(22) Anmeldetag: 10.03.1999
(51) Int. Cl.: H04B 7/26

(54) **Verfahren zur Steuerung der Basisstation eines Funktelefonsystems**
Method for controlling a base station of a radio telephone system
Procédé de commande d'une station de base d'un système de téléphone radio

(30) Priorität: 20.04.1998 AT 66398
(43) Veröffentlichungstag der Anmeldung: 27.10.1999
(73) Patentinhaber: SIEMENS AKTIENGESELLSCHAFT, 80333 München (DE)
(72) Erfinder: Höllrigl, Franz, 3931 Schweiggers (AT)

(56) Entgegenhaltungen:
- WO-A-94/18764
- WO-A-97/13335
- DE-A- 4 332 999

## Beschreibung

Die Erfindung bezieht sich auf ein Verfahren zur Steuerung der Basisstation (FIP) eines Funktelefonsystems, wie eines Schnurlos- oder Mobilfunksystems, von dem digitale Information zu einem oder mehreren Endgeräten auf ein oder mehrere Trägerfrequenzen aufmoduliert empfangen bzw. gesendet wird, mit einer Schnittstelle zwischen der Basisstation und einem digitalen Festnetz, z. B. einem ISDN-Netz, in dem digitale Information im Basisband, somit unmoduliert übertragen wird, wobei die Trägerfrequenz(en) in einem Hochfrequenzteil der Basisstation aus einem lokalen Oszillator abgeleitet wird (werden) und die Vermittlung der Datenübertragung zwischen dem Funktelefonsystem und dem Festnetz sowie die Basisbandverarbeitung von einer Steuereinheit durchgeführt wird.

Ebenso bezieht sich die Erfindung auf eine Basisstation eines Funktelefonsystems, wie eines Schnurlos- oder Mobilfunksystems mit einer Schnittstelle zu einem digitalen Festnetz, z. B. ISDN-Netz, mit einer Steuereinheit, einem Hochfrequenzteil und einem lokalen Oszillator für das Funktelefonsystem.

Die bekannten Mobilfunksysteme, wie z. B. GSM (Global System Mobile), arbeiten nach FDMA/TDMA-Verfahren, d. h. nach Frequenz-und Zeitmultiplexverfahren, wobei im Sinne aller Zeitmultiplexverfahren mit digitaler Datenübermittlung die einzelnen Datenbits in Rahmen zusammengefaßt sind. Die Aussendung der Daten erfolgt in Bursts, wobei internationale Standards genaue Vorgaben hinsichtlich der Daten- und Burstformate ebenso liefern, wie hinsichtlich der Frequenzgenauigkeit. Letztere liegt beispielsweise im GSM-System bei 0,05 ppm, wobei die Basisstationen einen genauen Takt erzeugen, der meist noch von einem hochgenauen, etwa einem von einem Cäsium-Normale abgeleiteten Takt in einer PLL synchronisiert ist. Der in einem lokalen Oszillator der Basisstation erzeugte Takt synchronisiert nicht nur den Bittakt und den Rahmentakt sondern ist auch die Referenz für die Sendefrequenzen. Die Mobilteile sind hinsichtlich des Taktes "Slaves", d. h. sie synchronisieren sich bei bestehender Verbindung auf die Basisstation auf.

Schnurlostelefone bzw. -systeme unterscheiden sich von Mobilfunksystemen vor allem durch die Zellengröße, die beispielsweise je Basisstation im Bereich bis ca. 300 m liegt. Auf dem Gebiet der Schnurlostelefone existieren ebenfalls weiträumig akzeptierte Standards, von welchen das DECT-Sytem (Digital Enhanced Cordless Telecommunications) verbreitet ist. Die Basisstation eines Schnurlostelefonsystems steht im allgemeinen über eine Schnittstelle mit einem Telefon-Festnetz in Verbindung, bei herkömmlichen analogen Festnetzen über einen entsprechenden Zweiadern-Anschluß, bei einem ISDN-Netz (Integrated Services Digital Network) über die genormte Sₒ-Schnittstelle. Im Rahmen der Erfindung sollen digitale Festnetze, wie das ISDN-Netz betrachtet werden, bei welchen die Daten gleichfalls in digitaler Form, die Bits zu Rahmen zusammengefaßt, übertragen werden.

Digitale Festnetze unterscheiden sich allerdings in verschiedener Hinsicht bezüglich der Art der Datenübertragung von Mobilfunk- oder Schnurlostelefonsystemen, wobei für die vorliegende Erfindung von Bedeutung ist, daß die Daten nicht nur in Rahmen unterschiedlicher Länge und mit einem unterschiedlichen Takt übertragen werden, sondern daß auch unterschiedliche Anforderungen an die Taktgenauigkeit gestellt werden. So ist die Taktgenauigkeit in einem ISDN-System mit lediglich 50 oder 100 ppm festgelegt, wogegen, wie vorhin erwähnt, bei einem GSM-System 0,05 ppm gefordert werden.

In letzter Zeit werden verschiedene Bemühungen dahingehend unternommen, die weitverbreiteten "Handys", d. h die Mobilteile eines Funktelefonsystems, auch als Schnurlostelefone verwenden zu können. Beispielsweise sind die sogenannten Dual-Mode-Handys bekannt geworden, die weitgehend getrennte HF-Teile für einerseits ein Schnurlossystem und für andererseits ein Mobilfunksystem besitzen, z. B. DECT- und GSM-HF-Teile. Ein solches Dual-Mode-Handy kann, ohne daß es irgendeines händischen Umschaltens bedarf, außerhalb der Schnurloszelle als Funktelefon, innerhalb dieser Zelle jedoch als Schnurlostelefon verwendet werden, wobei Gespräche dann nach dem meist wesentlich günstigeren Tarif des Festnetzes verrechnet werden.

Neuere Bestrebungen gehen aber dahin, Handys zu schaffen, die innerhalb der Schnurlos-Zelle praktisch den gleichen Standard verwenden wie in dem Mobilfunknetz. So ist eine Entwicklung unter der Abkürzung CTS (Cordless Telephony System) bekannt geworden, bei welcher die aufwendige Zweiteilung z. B. des HF-Systems in dem Handy nicht mehr erforderlich ist. Eine Darstellung des CTS-Systems ist beispielsweise in den vorläufigen ETSI-Empfehlungen: GSM 3.56 (CTS Architecture Description) und GSM 2.56 (CTS Service Description), Nürnberg, 10/11 Dez. 1997, zu finden. Die nach wie vor jedoch unterschiedlichen Daten- und Taktformate zwischen z. B. DECT einerseits und GSM andererseits bedingen in der an das Festnetz angeschlossenen Basisstation den Einsatz eines Schnittstellenwandlers. Man kann aufwendige Algorithmen zur Taktwandlung verwenden, um einen Über- oder Unterlauf von Daten aufgrund der unterschiedlichen Taktraten zu vermeiden. Bei DECT-Basisstationen tritt dieses Problem natürlich auch auf und hier werden die Hochfrequenz und der Bittakt synchronisiert, jedoch wird bei Bedarf die Rahmendauer geändert, so daß die langfristige Bitrate an das ISDN-System angeglichen wird. Die Ausführung ist größtenteils hardwaremäßig bereits in den DECT-Basisstationen implementiert. Schnittstellen zur Verbindung von Basisstationen von Funktelefonsystemen mit einem Festnetz sind beispielsweise in der EP 0 690 641 A2 und der EP 0 624 995 A1 beschrieben. Eine Basisstation eines Funktelefonsystems mit einer Schnittstelle zu einem digitalen Festnetz ist in der WO 9713335 A beschrieben.

Die Erfindung hat sich die Aufgabe gestellt, das Problem der unterschiedlichen Taktfrequenzen auf möglichst einfache Weise zu lösen, d. h. mit geringem Aufwand sowohl an Hard- als auch an Software, wobei auch die Verwendung bereits vorhandener Chipsätze mit geringstmöglichen Modifikationen erlaubt sein sollte. Im allgemeiner Form soll das Problem unterschiedlicher Taktfrequenzen mit auch unterschiedlicher Genauigkeit bei einem System, bestehend aus zwei Übertragungs/Vermittlungssystemen wie eingangs genannt gelöst werden.

Diese Aufgabe wird mit einem Verfahren der eingangs genannten Art gelöst, bei welchem erfindungsgemäß der Takt für die Steuereinheit aus dem Takt des digitalen Festnetzes abgeleitet wird, wogegen für die Steuerung und Synchronisierung des Hochfrequenzteils ein von dem Takt des digitalen Netzes unabhängiger lokaler Takt erzeugt wird.

Durch die erfindungsgemäße Takttrennung wird dem Hochfrequenzteil der benötigte genaue Takt zugeführt, doch ist davon die Bit-und Rahmensynchronisation getrennt; sie wird mit dem Takt des Festnetzes durchgeführt, wodurch die Basisstation automatisch die richtige Datenrate liefert. Modifikationen an handelsübliche (GSM)-Chipsätzen sowie an Software für Basisstationen und Handys beschränken sich auf ein Minimum.

Wie bereits erwähnt ist es zweckmäßig, wenn durch den abgeleiteten Takt der Rahmentakt sowie der Bittakt für die Basisstation und damit für die Mobilteile bestimmt wird.

Die Erfindung ist besonders zweckmäßig, falls das digitale Festnetz ein ISDN-Netz und das Funktelefonsystem ein CTS-System ist.

Die gestellte Aufgabe wird auch mit einer Basisstation der zu Beginn genannten Art gelöst, bei welcher erfindungsgemäß zur Erzeugung des Arbeitstaktes für die Steuereinheit ein Synthesizer vorgesehen ist, dessen Eingang der Takt des digitalen Netzes bzw. ein dazu vielfacher Takt zugeführt ist, sodaß der Arbeitstakt der Steuereinheit mit dem Takt des digitalen Netzes synchronisiert ist und das Ausgangssignal des lokalen Oszillators unabhängig von dem Ausgangstakt des Synthesizers zur Steuerung und Synchronisierung lediglich des Hochfrequenzteils herangezogen ist.

Die hierdurch erzielbaren Vorteile wurden bereits in Zusammenhang mit dem verfahren nach der Erfindung genannt, doch ist anzumerken, daß bei einer Modifikation einer Basisstation die Implementierung des zusätzliche Synthesizers nur geringfügige Kosten verursacht.

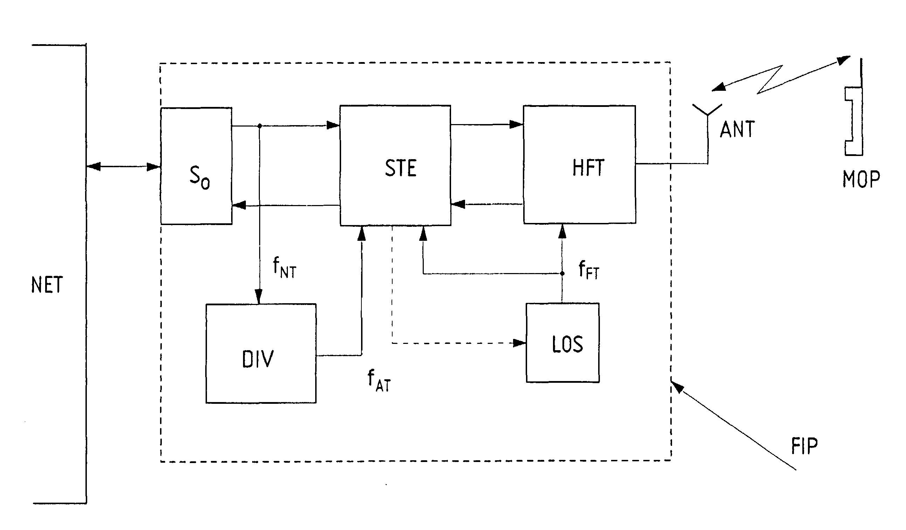

Die Erfindung samt weiterer Vorteile ist im folgenden an Hand eines Ausführungsbeispiels näher erläutert, das in der Zeichnung veranschaulicht ist. Diese zeigt in schematischer Darstellung eine Basisstation für ein Schnurlostelefonsystem, die über eine Schnittstelle an ein Festnetz angeschlossen ist.

Gemäß der einzigen Figur der Zeichnung weist eine Basisstation, beispielsweise eines CTS-Schnurlostelefonsystems, eine Schnittstelle Sₒ zu einem digitalen Festnetz, z.B. einem ISDN-Netz auf, auch Amtskopf genannt. Ein Hochfrequenzteil HFT ist an eine Antenne ANT angeschlossen, so daß sich eine Funkschnittstelle zu einem Mobilteil MOP ergibt.

Ein wesentlicher Teil der Basisstation ist von einer Steuereinheit STE gebildet, welche prinzipiell die Datenverarbeitung durchführt und auch für die Basisbandverarbeitung sorgt. Insbesondere werden hier die von der ISDN-Seite einerseits und von der CTS(GSM)-seite andererseits in unterschiedlichen Rahmenformaten einlangenden Daten in der erforderlichen Weise angepaßt.

Der Hochfrequenzteil HFT erhält seinen Muttertakt f_{FT} von einem lokalen Oszillator LOS, im allgemeinen einem Quarzoszillator, dem seitens der Steuereinheit STE auch ein AFC-Signal zugeführt sein kann, was hier nur strichliert angedeutet ist, da für die Erfindung nicht von Bedeutung. Der lokale und genaue Oszillator LOS ist für die zur Anwendung gelangenden Sende-und Empfangsfrequenzen bestimmend, d.h. die Trägerfrequenzen werden durch Multiplikation oder Division aus der Frequenz des Oszillators LOS erzeugt, die beispielsweise 13 MHz beträgt.

Weiters enthält die Basisstation FIP einen Synthesizer SYN, dem als Eingangssignal der Takt des digitalen Festnetzes, hier ein ISDN-Netz, zugeführt ist, nämlich ein Takt f_{NT}, der z.B. 8 kHz beträgt Selbstverständlich kann der dem Synthesizer zugeführte Takt auch ein Vielfaches des Taktes des digitalen Netzes oder einen Teil davon betragen. Der Synthesizer SYN, der analoger oder digitaler Bauart sein kann, erzeugt aus dem ihm zugeführten Takt einen Arbeitstakt für die Steuereinheit STE, der dem von dem lokalen Oszillator LOS erzeugten Takt seiner Frequenz nach entspricht, mit diesem jedoch nicht synchronisiert ist, und im vorliegenden Beispiel gleichfalls 13 MHz beträgt.

Der Arbeitstakt für den GSM/CTS-Chipsatz, d.h. die Steuereinheit STE, wird somit von dem ISDN-Netz abgeleitet und dementsprechend erfolgt die Bit- und Rahmensynchronisation, so daß die Basisstation automatisch die richtige Datenrate liefert. Für das Mobilteil MOP bildet die Basisstation FIP den Master sowohl hinsichtlich der Bitfrequenz als auch hinsichtlich der Rahmenfrequenz. Die Basisstation leitet diese Takte aus dem ISDN-Netz NET ab und das Mobilteil MOP synchronisiert sich darauf ebenso, wie auf die in der Basisstation lokal erzeugte Hochfrequenz. Dadurch kommt es zwar zu einem Zeitfehler, da im Mobilteil MOP Zeit und Frequenz aus einem einzigen Oszillator bezogen werden, doch erfolgt die deshalb notwendige Korrektur ebenso wie in einem üblichen GSM-System, bei welchem gleichfalls nur eine unvollständige Frequenzsynchronisation vorliegt, in bekannter Weise mit Hilfe z.B. eines Rahmenzählers (Frame Clock Counter) unter Benutzung der empfangenen Bursts.

## Patentansprüche

1. Verfahren zur Steuerung der Basisstation (FIP) eines Funktelefonsystems, wie eines Schnurlos- oder Mobilfunksystems, von dem digitale Information zu einem oder mehreren Endgeräten (MOP) auf ein oder mehrere Trägerfrequenzen aufmoduliert empfangen bzw. gesendet wird, mit einer Schnittstelle (S₀) zwischen der Basisstation und einem digitalen Festnetz (NET), z. B. einem ISDN-Netz, in dem digitale Information im Basisband, somit unmoduliert übertragen wird, wobei die Trägerfrequenz(en) in einem Hochfrequenzteil (HFT) der Basisstation aus einem lokalen Oszillator (LOS) abgeleitet wird (werden) und die Vermittlung der Datenübertragung zwischen dem Funktelefonsystem und dem Festnetz sowie die Basisbandverarbeitung von einer Steuereinheit (STE) durchgeführt wird,
wobei
der Takt (f_{AT}) für die Steuereinheit (STE) aus dem Takt (f_{NT}) des digitalen Festnetzes (NET) abgeleitet wird, wogegen für die Steuerung und Synchronisierung des Hochfrequenzteils (HFT) ein von dem Takt des digitalen Netzes unabhängiger lokaler Takt (f_{FT}) erzeugt wird.

2. Verfahren nach Anspruch 1,
**dadurch gekennzeichnet, daß** durch den abgeleiteten Takt (f_{AT}) der Rahmentakt sowie der Bittakt für die Basisstation (FIP) und damit für die Mobilteile (MOP) bestimmt wird.

3. Verfahren nach Anspruch 1 oder 2,
**dadurch gekennzeichnet, daß** das digitale Festnetz (NET) ein ISDN-Netz und das Funktelefonsystem ein CTS-System ist.

4. Basisstation (FIP) eines Funktelefonsystems, wie eines Schnurlos- oder Mobilfunksystems mit einer Schnittstelle (S₀) zu einem digitalen Festnetz (NET), z. B. ISDN-Netz, mit einer Steuereinheit (STE), einem Hochfrequenzteil (HFT) und einem lokalen Oszillator (LOS) für das Funktelefonsystem,
wobei
zur Erzeugung des Arbeitstaktes (f_{AT}) für die Steuereinheit (STE) ein Synthesizer (SYN) vorgesehen ist, dessen Eingang der Takt (f_{NT}) des digitalen Netzes (NET) bzw. ein dazu vielfacher Takt zugeführt ist, sodaß der Arbeitstakt der Steuereinheit mit dem Takt des digitalen Netzes synchronisiert ist,
und das Ausgangssignal (f_{FT}) des lokalen Oszillators (LOS) unabhängig von dem Ausgangstakt (f_{AT}) des Synthesizers (SYN) zur Steuerung und Synchronisierung lediglich des Hochfrequenzteils (HFT) herangezogen ist.

## Claims

1. Method for controlling the base station (FIP) of a radio telephone system, such as a cordless or mobile radio system, by which digital information to one or more terminals (MOP) is received or, as the case may be, sent modulated onto one or more carrier frequencies, having an interface (S₀) between the base station and a digital fixed network (NET), for example an ISDN network, in which digital information is transmitted in the baseband, hence unmodulated, with the carrier frequency/frequencies in a high-frequency component (HFT) of the base station being derived from a local oscillator (LOS) and with switching of the data transmission between the radio telephone system and the fixed network as well as baseband processing being performed by a control unit (STE),
wherein
the clock (f_{AT}) for the control unit (STE) is derived from the clock (f_{NT}) of the digital fixed network (NET) whereas a local clock (f_{FT}) independent of the clock of the digital network is generated for controlling and synchronising the high-frequency component (HFT).

2. Method according to claim 1,
**characterised in that** the frame clock and the bit clock for the base station (FIP) and hence for the handsets (MOP) is determined by the derived clock (f_{AT}).

3. Method according to claim 1 or 2,
**characterised in that** the digital fixed network (NET) is an ISDN network and the radio telephone system is a CTS system.

4. Base station (FIP) of a radio telephone system, such as a cordless or mobile radio system, having an interface (S₀) to a digital fixed network (NET), for example an ISDN network, having a control unit (STE), a high-frequency component (HFT) and a local oscillator (LOS) for the radio telephone system,
wherein
a synthesiser (SYN) to the input of which the clock (f_{NT}) of the digital network (NET) or, as the case may be, a clock that is a multiple thereof is routed is provided for generating the working clock (f_{AT}) for the control unit (STE) so that the working clock of the control unit is synchronised with the clock of the digital network,
and the output signal (f_{FT}) of the local oscillator (LOS) is used independently of the output clock (f_{AT}) of the synthesiser (SYN) for controlling and synchronising only the high-frequency component (HFT).

## Revendications

1. Procédé de commande d'un poste de base (FIP) d'un système de radiotéléphonie, par exemple un système de téléphonie sans fil ou un système de radiotéléphonie mobile, par lequel une information numérique modulée sur une ou plusieurs fréquences porteuses est reçue resp. envoyée par un ou plusieurs terminaux (MOP), lequel système présente une interface (S₀) entre le poste de base et un réseau numérique fixe (NET), par exemple un réseau ISDN, dans lequel une information numérique est transmise dans la bande de base et donc sans modulation, la ou les fréquences porteuses étant dérivées d'un oscillateur local (LOS) dans une partie à haute fréquence (HFT) du poste de base et la transmission des données entre le système de radiotéléphonie et le réseau fixe ainsi que le traitement de la bande de base étant réalisés par une unité de commande (STE),
dans lequel
la cadence d'horloge (f_{AT}) de l'unité de commande (STE) est dérivée de la cadence d'horloge (f_{NT}) du réseau numérique fixe (NET), mais pour la commande et la synchronisation de la partie à haute fréquence (HFT), une cadence d'horloge locale (f_{FT}) indépendante de la cadence d'horloge du réseau numérique est créée.

2. Procédé selon la revendication 1, **caractérisé en ce que** la cadence d'horloge des trames ainsi que la cadence d'horloge des bits pour le poste de base (FIP) et donc pour les éléments mobiles (MOP) sont déterminées par la cadence d'horloge (f_{AT}) dérivée.

3. Procédé selon la revendication 1 ou 2, **caractérisé en ce que** le réseau numérique fixe (NET) est un réseau ISDN et le système de radiotéléphonie un système CTS.

4. Poste de base (FIP) d'un système de radiotéléphonie, par exemple un système sans fil ou un système de radiotéléphonie mobile, qui présente une interface (S₀) avec un réseau numérique fixe (NET), par exemple un réseau ISDN, une unité de commande (STE), une partie à haute fréquence (HFT) et un oscillateur local (LOS) pour le système de radiotéléphonie,
dans lequel
pour créer la cadence d'horloge de travail (f_{AT}) de l'unité de commande (STE), il est prévu un synthétiseur (SYN) à l'entrée duquel la cadence d'horloge (f_{NT}) du réseau numérique (NET) resp. une cadence d'horloge multiple de cette dernière est apportée, de telle sorte que la cadence d'horloge de travail de l'unité de commande est synchronisée sur la cadence d'horloge du réseau numérique,
et le signal de sortie (f_{FT}) de l'oscillateur local (LOS) est utilisé indépendamment de la cadence d'horloge de sortie (f_{AT}) du synthétiseur (SYN) pour commander et synchroniser uniquement la partie à haute fréquence (HFT).
